# EUROPEAN PATENT SPECIFICATION

(11) **EP 3 062 569 B1**
(45) Date of publication and mention of the grant of the patent: **09.01.2019**
(21) Application number: 15156305.3
(22) Date of filing: 24.02.2015
(51) Int. Cl.: H04W 52/28, H04W 52/32, H04W 52/46

(54) **APPARATUSES, METHODS AND COMPUTER PROGRAMS FOR CONTROLLING AN OUTPUT POWER OF A BASE STATION TRANSCEIVER AND FOR A BASE STATION TRANSCEIVER**
VORRICHTUNGEN, VERFAHREN UND COMPUTERPROGRAMME ZUR STEUERUNG EINER AUSGANGSLEISTUNG EINES BASISSTATION-SENDER-EMPFÄNGER UND FÜR EINEN BASISSTATION-SENDER-EMPFÄNGER
APPAREILS, PROCÉDÉS ET PROGRAMMES INFORMATIQUES PERMETTANT DE COMMANDER UNE PUISSANCE DE SORTIE D'UN ÉMETTEUR-RÉCEPTEUR DE STATION DE BASE ET POUR UN ÉMETTEUR-RÉCEPTEUR DE STATION DE BASE

(43) Date of publication of application: 31.08.2016
(73) Proprietor: Nash Innovations GmbH, 90491 Nürnberg (DE)
(72) Inventor: Dr. Keuker, Claus, 82327 Tutzing (DE); Reichenbach, Jörg Arnt, 90542 Eckental (DE)
(74) Representative: 2SPL Patentanwälte PartG mbB

(56) References cited:
- EP-A1- 2 830 369
- EP-A2- 2 416 610
- BYRON ALEX BAKAIMIS ET AL: "Power Control/Allocation Solutions for Mobile Relays for Future Cellular Systems", 2005 6TH IEE INTERNATIONAL CONFERENCE ON 3G AND BEYOND, 7 November 2005 (2005-11-07), pages 441-444, XP055090892,

## Description

### Technical Field

Embodiments relate to apparatuses, methods and computer programs for controlling an output power of a base station transceiver and for a base station transceiver, and more particularly, but not exclusively, to controlling an output power of a common channel during service provision of a base station transceiver to influence handover behavior of mobile transceivers associated with the base station transceiver.

### Background

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. Users of today's handhelds become more difficult to satisfy. While old feature phones generated only data or voice traffic, current smartphones, tablets, and netbooks run various applications in parallel that can fundamentally differ from each other. Compared to conventional phones, this application mix leads to a number of new characteristics. For example, highly dynamic load statistics result, where the average load is increasing. Moreover, the number of networks for voice and data access is also increasing, therewith roaming options between these networks become available when multiple network layers overlap or at network boundaries, respectively.

One way to further increase the capacity of cellular system as well as link capacities is deployment of additional cells, such a macro cell and also small cells. Small cells have a smaller coverage area and are often used to generate additional service coverage in hot spots while being overlaid by macro cells. Such small cells are also used in homes, vehicles, shopping centers, etc. and dependent on the size of their coverage area they are also referred to as metro, micro and femto cells. The size of their coverage area is determined by their transmission power, interference and noise condition.

Document EP 2 830 369 describes a concept for power adaptation of a mobile relay transceiver in a mobile communication system. The transmission power of a mobile relay station transceiver of a vehicle is adapted based on whether a door or a window of the vehicle opens.

### Summary

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide apparatuses, methods and computer programs for controlling an output power of a base station transceiver and for a base station transceiver. Embodiments may provide a concept for dynamically influencing the output power of a base station, such that a handover or cell reselection behavior of associated mobile transceivers can be dynamically influenced. While embodiments may relate to any base station transceiver or access node, they may particularly be beneficial for mobile relay station transceivers, which are implemented in vehicles. Embodiments may allow influencing the coverage are of such a mobile relay station transceiver such that a handover and cell reselection behavior of associated mobile transceivers can beneficially influenced, in particular when the vehicle moves and stops.

Embodiments provide an apparatus for controlling an output power during service provision of a base station transceiver of a mobile communication system. The base station transceiver is configured to provide wireless services to one or more mobile transceivers of the communication system. The apparatus comprises a coupling module to affect a radio signal transmission power of the base station transceiver. The apparatus further comprises a control module to obtain information related to an output power adaption for the base station transceiver and to control the output power of the base station transceiver using the coupling module based on the information related to the output power adaption. Embodiments may enable enhanced system performance of a mobile communication system by dynamically influencing the transmission power of a base station transceiver.

Embodiments further provide an apparatus for a base station transceiver of a mobile communication system. The base station transceiver is configured to provide wireless services to one or more mobile transceivers of the communication system. The base station transceiver apparatus comprises a transmission module to transmit a common signal. A transmission power of the common signal influences a service coverage area of the base station transceiver. The base station transceiver apparatus further comprises a control module to control the transmission module, and to adjust the transmission power for the common signal dynamically during service provision of the base station transceiver. Embodiments may provide an enhanced base station transceiver, which dynamically influences its coverage area through dynamic control of the output power of its common channel.

In some embodiments the base station transceiver apparatus further comprises a coupling interface for the above-described apparatus for controlling the output power. In some embodiments the base station transceiver apparatus may comprise an apparatus for controlling the output power. Embodiments may hence provide a base station transceiver with dynamically controlled coverage. The coupling module of the apparatus for controlling the output power can be configured to affect a transmission power of a common channel of the base station transceiver. The common channel determines a coverage area of the base station transceiver.

In some embodiments of the apparatus for controlling the output power, the information related to the output power adaption comprises one or more elements of the group of information related to state of movement of the vehicle, information related to a signal quality of a cell of the mobile communication system overlaying or neighboring a coverage area of the base station transceiver, and/or information related to an upcoming switch-off of the base station transceiver. Embodiments may influence the output power of a base station transceiver based on the surrounding circumstances, e.g. the state of movement of a vehicle when the base station transceiver is implemented therein, a state of surrounding or neighboring cells, etc. Embodiments may therewith enable more efficient mobility procedures in a mobile communication system.

In further embodiments of the apparatus for controlling the output power the control module is configured to influence a handover behavior of the one or more mobile transceivers between the base station transceiver and another base station transceiver of the mobile communication system by affecting the radio signal transmission power of the base station transceiver. Embodiments may reduce call drop rates and/or failed handover attempts in a mobile communication system. In some embodiments of the apparatus for controlling the output power the coupling module corresponds to an adjustable attenuator in the radio signal transmission path of the base station transceiver. Embodiments may enable a simple implementation of the concept by taking effect in the radio signal processing path of the base station transceiver, e.g. influence a radio signal at the input or output of a transmission or power amplifier. In further embodiments of the apparatus for controlling the output power the coupling module may correspond to a coupling element configured to couple to a variable gain amplifier in the radio signal transmission path of the base station transceiver. Embodiments may influence a gain factor of a transmission or power amplifier of a base station transceiver and therewith influence the transmission power. Embodiments may enable efficient implementation by influencing said amplification gain.

In some embodiments of the apparatus for controlling the output power the coupling module corresponds to one or more interfaces configured to set a transmission power setting at the base station transceiver. Embodiments may enable to influence the transmission power through digital communication between the apparatus and the base station transceiver, for example, parameter settings for the amplification or transmission power may be modified to adapt or adjust the transmission power. Embodiments may enable efficient implementations of the apparatus for controlling by allowing digitally communicating transmission power settings. In further embodiments of the apparatus for controlling the output power the coupling module may be configured to affect the transmission power of the base station transceiver dynamically during service provision of the base station transceiver.

In further embodiments the service coverage area of the base station transceiver may correspond to a small cell, a micro cell, or a femto cell. The base station transceiver may correspond to a relay station transceiver or a mobile relay station transceiver. In some embodiments of the base station transceiver apparatus the control module may be further configured to broadcast information related to a power setting for the transmission of the common signal, which is different from an actual power setting for the transmission of the common signal after adjusting the transmission power of the common signal. Embodiments may allow setting the transmission power of a common channel differently from what is communicated as system information to further influence the behavior of associated mobile transceivers.

Embodiments further provide a method for controlling an output power during service provision of a base station transceiver of a mobile communication system. The base station transceiver is configured to provide wireless services to one or more mobile transceivers of the communication system. The method comprises affecting a radio signal transmission power of the base station transceiver, and obtaining information related to an output power adaption for the base station transceiver. The method comprises controlling the output power of the base station transceiver based on the information related to the output power adaption.

Embodiments further provide a method for a base station transceiver of a mobile communication system. The base station transceiver is configured to provide wireless services to one or more mobile transceivers of the communication system. The method comprises transmitting a common signal. A transmission power of the common signal influences a service coverage area of the base station transceiver. The method further comprises adjusting the transmission power for the common signal dynamically during service provision of the base station transceiver.

Embodiments further provide a computer program having a program code for performing one or more of the above described methods, when the computer program is executed on a computer, processor, or programmable hardware. A further embodiment is a computer readable storage medium storing instructions which, when executed by a computer, processor, or programmable hardware, cause the computer to implement one of the methods described herein.

### Brief description of the figures

Some other features or aspects will be described using the following non-limiting embodiments of apparatuses and/or methods and/or computer programs and/or computer program products by way of example only, and with reference to the accompanying figures, in which
Fig. 1 illustrates a block diagram of an embodiment of an apparatus for controlling;
Fig. 2 shows a further embodiment of an apparatus for controlling a base station transceiver;
Fig. 3 shows another embodiment of an apparatus for controlling an output power of a base station transceiver;
Fig. 4 shows another embodiment of an apparatus for controlling an output power of a base station transceiver;
Fig. 5 shows yet another embodiment of an apparatus for controlling an output power of a base station transceiver;
Fig. 6 shows an embodiment of a mobile relay station transceiver;
Fig.7 shows a block diagram of a flow chart of an embodiment of a method for controlling an output power; and
Fig. 8 shows a block diagram of a flow chart of an embodiment of a method for a base station transceiver.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Embodiments may generally provide a concept for dynamic power control of an output signal of a common, pilot, or broadcast channel of a base station transceiver; in particular, for vehicular small cells, or all base stations where a dynamic power control is necessary and the internal power control mechanisms do not apply. Conventional base station transceivers and in particular small cells do not control the transmission power of their common channels in a dynamic manner. Dynamic power control of the common channels is, for example, not supported by the 3^{rd} Generation (3G) stack implementations as changing those power levels is not considered necessary for a stationary small cell. This means that in case the total cell power is adapted, this might not happen dynamically when the small cell is active, but rather after rebooting the base station transceiver, which takes too long to be considered dynamic control. When the common channel powers are reconfigured, a conventional small cell may announce this to the UEs in the vicinity of the cell. In embodiments power control dynamics applied may fall in a range of more than several 10dBs per second, for example, embodiments may adjust the transmission power by more than 10dB, 20dB, 30dB, 40dB, 50dB, 60dB, 70dB per 25ms, 50ms, 100ms, 150ms, 200ms, 500ms, etc. Embodiments may adjust the transmission power while service provision is ongoing, without having to deactivate service provision of a base station transceiver. In the following when referring to dynamic power adjustments, these adjustments may fall in at least one of the above ranges.

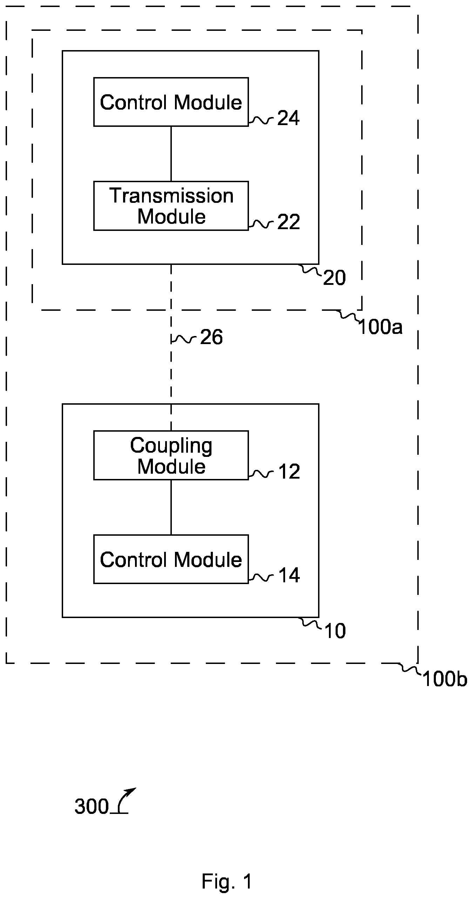

Fig. 1 illustrates a block diagram of an embodiment of an apparatus 10 for controlling an output power during service provision of a base station transceiver 100a, 100b of a mobile communication system 300. The base station transceiver 100a, 100b is configured to provide wireless services to one or more mobile transceivers of the communication system 300. The apparatus 10 comprises a coupling module 12 to affect a radio signal transmission power of the base station transceiver 100a, 100b. The apparatus 10 further comprises a control module 14, which is coupled to the coupling module 12. The control module 14 is configured to obtain information related to an output power adaption for the base station transceiver 100 and to control the output power of the base station transceiver 100 using the coupling module 12 based on the information related to the output power adaption.

Fig. 1 further illustrates an embodiment of an apparatus 20 for a base station transceiver 100a, 100b of a mobile communication system 300. The base station transceiver 100a, 100b is configured to provide wireless services to one or more mobile transceivers of the communication system. The apparatus 20 comprises a transmission module 22 to transmit a common signal. A transmission power of the common signal influences a service coverage area of the base station transceiver 100a, 100b. The apparatus 20 further comprises a control module 24, which is coupled to the transmission module 22. The control module 24 is configured to control the transmission module 22, and to adjust the transmission power for the common signal dynamically during service provision of the base station transceiver 100a, 100b. Fig. 1 further illustrates two embodiments of optional base station transceivers 100a and 100b (optional components or elements in the Figs. are shown in broken lines). In a first embodiment of a base station transceiver 100a, the base station transceiver 100a comprises an embodiment of the apparatus 20, and the embodiment of the apparatus 10 is external to the base station transceiver 100a. In the second embodiment of a base station transceiver 100b, the base station transceiver 100b comprises an embodiment of the apparatus 10 and an embodiment of the apparatus 20. In some embodiments the apparatus 20 further comprises a coupling interface 26 for the apparatus 10, for example to couple to the coupling module 12.

In embodiments the mobile communication system 500 may, for example, correspond to one of the mobile communication systems standardized by the 3^{rd} Generation Partnership Project (3GPP), e.g. Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile or relay transceiver. In embodiments, the mobile communication system may comprise mobile transceivers, relay station transceivers and base station transceivers. The relay station transceivers and base station transceivers can be composed of one or more central units and one or more remote units.

A mobile transceiver may correspond to a smartphone, a cell phone, User Equipment (UE), a laptop, a notebook, a personal computer, a Personal Digital Assistant (PDA), a Universal Serial Bus (USB) -stick, a tablet computer, a car, etc. A mobile transceiver or terminal may also be referred to as UE or user in line with the 3GPP terminology. A base station transceiver can be located in the fixed or stationary part of the network or system. A base station transceiver may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A base station transceiver can be a wireless interface of a wired network, which enables transmission and reception of radio signals to a UE, mobile transceiver or relay transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc. A relay station transceiver may correspond to an intermediate network node in the communication path between a base station transceiver and a mobile station transceiver. A relay station transceiver may forward a signal received from a mobile transceiver to a base station transceiver, signals received from the base station transceiver to the mobile station transceiver, respectively.

The mobile communication system may be cellular. The term cell refers to a coverage area of radio services provided by a transmission point, a remote unit, a remote head, a remote radio head, a base station transceiver, relay transceiver or a NodeB, an eNodeB, respectively. The terms cell and base station transceiver may be used synonymously. In some embodiments a cell may correspond to a sector. For example, sectors can be achieved using sector antennas, which provide a characteristic for covering an angular section around a base station transceiver or remote unit. In some embodiments, a base station transceiver or remote unit may, for example, operate three or six cells covering sectors of 120° (in case of three cells), 60° (in case of six cells) respectively. Likewise a relay transceiver may establish one or more cells in its coverage area. A mobile transceiver can be registered or associated with at least one cell, i.e. it can be associated to a cell such that data can be exchanged between the network and the mobile in the coverage area of the associated cell using a dedicated channel, link or connection. A mobile transceiver may hence register or be associated with a relay station or base station transceiver directly or indirectly, where an indirect registration or association may be through one or more relay transceivers.

Embodiments of a mobile relay apparatus may improve the cellular coverage in a vehicle. A relay node may be used in order to connect multiple terminals inside of the vehicle and provide an aggregated connection to a stationary cellular communication system via a wireless backhaul link to a stationary cellular communications network, for example, over one or more external vehicle antennas. In the following the link between a stationary base station and an external antenna of a vehicle relay node may be denoted as relay or backhaul link; the link between a relay node and end user terminals will be denoted as access link.

Such a relay node may, for example, correspond to a relay as defined in 3^{rd} Generation Partnership Project (3GPP) Release 10, a moving relay as currently discussed in 3GPP Release 12 study groups and in current research literature, a wireless repeater (analog or digital), or a femto cell with a wireless backhaul connection. In case of a femto cell, the wireless backhaul connection could be provided over a separate cellular communication terminal, e.g., a 2G/3G/4G modem. It is another finding that for the relay link and for the access link, respectively, the same or different frequency and spectrum resources can be used.

Note that in the following description of embodiments the term "femto cell" will be used as a synonym for the term "Home eNB" as used in 3GPP standards, for small cells, such as micro, pico, femto cells, etc., as well as relay nodes defined according to 3GPP Release 10 & following releases.

The coupling module 12 may correspond to one or more coupling units, one or more coupling devices, or any means for coupling. For example, attenuators, resistors, transistors etc. may be used. Some embodiments may implement the coupling module using another adjustable component and provide an accordingly configured adjustment signal, which may be digital or analog, for example, a signal for a variable gain amplifier, a signal to control a transistor, to set a gain factor in a register, etc. The coupling module 12 may then correspond to an interface which allows interacting with a corresponding further component to adjust or set the transmission power, as will be further detailed subsequently.

A control module 14, 24 may correspond to one or more control units, one or more control devices, or any means for controlling. In some embodiments a control module 14, 24 may be implemented in software, which is executable on accordingly adapted hardware, such as a processor, a Digital Signal Processor (DSP), a multi-purpose processor, or the like. In embodiments the one or more interfaces 26 may correspond to any interfaces adapted to the respective communication or access technology, which may be wireless or wire line communication. An interface may use a certain access technology, protocol, medium, etc. to establish a connection between the coupling module 12 and the transmission module 22. As an example, in an embodiment the one or more interfaces 26 may correspond to one or more radio frequency connectors, couplers, attenuators, or plugs, allowing a communication, connection, or signal transfer, signal attenuation, signal modification of the signals provided by the transmission module 22 through the coupling module 12.

The transmission module 22, which may comprise transmitter and receiver elements or components, may correspond to one or more transmission units, one or more transmission devices, any means for transmitting, etc. In embodiments a transmission module 22 may comprise typical transmitter and/or receiver components. Such components may comprise one or more transmit and/or receive antenna connectors or antennas, a Low Noise Amplifier (LNA), a Power Amplifier (PA), one or more filters, one or more converters, one or more mixers, one or more duplexers, one or more diplexers etc.

Furthermore, in some embodiments the information related to the output power adaptation, based on which the output power of the base station transceiver 100a, 100b is influenced, may comprise one or more elements of the group of information related to state of movement of a vehicle, information related to a signal quality of a cell of the mobile communication system 300 overlaying or neighboring a coverage area of the base station transceiver 100a, 100b, and/or information related to an upcoming switch-off of the base station transceiver 100a, 100b. Embodiments may hence influence said output power based on certain further factors, that may be related to a location or radio condition the base station transceiver 100a, 100b is located in.

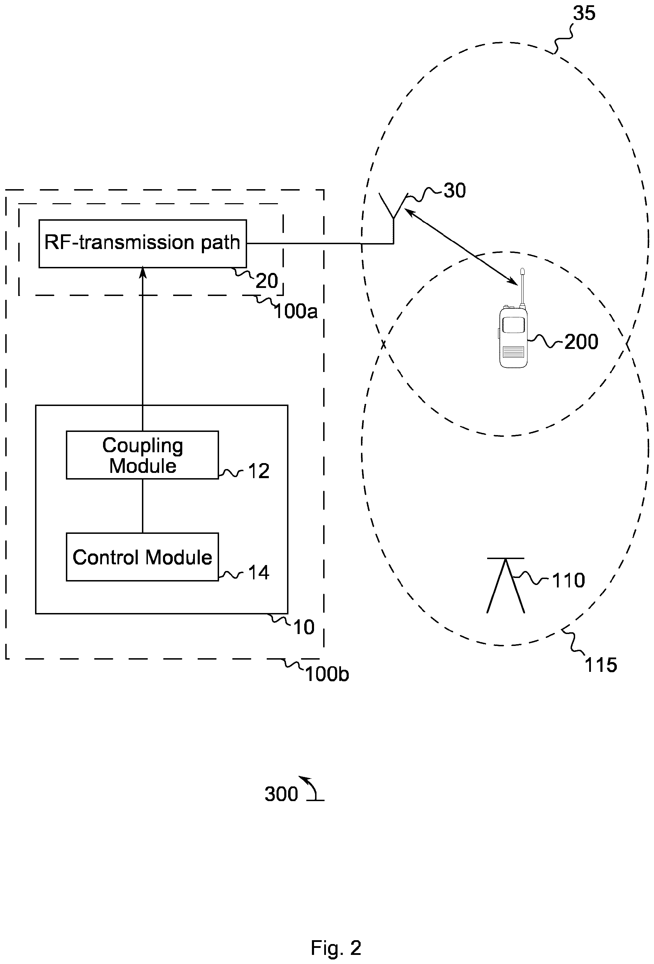

Some embodiments may modify the outgoing power of a base station transceiver, for example a small cell in the transmit path - after the Radio Frequency (RF) generation. Fig. 2 shows a further embodiment of an apparatus 10 for controlling an output power of a base station transceiver 100a, 100b. Fig. 2 further illustrates two embodiments of base station transceivers 100a, 100b according to the above described options. The scenario depicted in Fig. 2 shows similar components and elements as Fig. 1 and similar components are referenced with similar reference signs. Fig. 2 further illustrates a transmission antenna 30 of the base station transceiver 100a, 100b which is used to communicate (transmit and/or receive) radio signals to a mobile transceiver 200. The apparatus 20 is represented by an RF-transmission path of the base station transceiver 100a, 100b. Fig. 2 further shows the coverage area 35 as generated by the base station transceiver 100a, 100b, and another base station transceiver 110 generating another coverage area 115, which overlaps with coverage area 35. The mobile transceiver 200 could hence potentially communicate with both base station transceivers 100a, 100b, 110.

The scenario illustrated in Fig. 2 shall further show that the coupling module 12, as part of the apparatus 10, may be configured to influence a handover behavior of the one or more mobile transceivers 200 between the base station transceiver 100a, 100b and the other base station transceiver 110 of the mobile communication system 300 by affecting the radio signal transmission power of the base station transceiver 100a, 100b. Affecting the radio signal transmission power of the base station transceiver 100a, 100b may further influence the coverage area 35 and therewith the handover behavior of the mobile transceiver 200.

Some advantages of such embodiments could be that small cell implementations, which do not support dynamic reconfiguration of the cell's common channels or general power settings, can now be used in vehicular small cell implementations. The RF conditions that a UE 200 sees when measuring the small cell 35 can be artificially modified. It is to be noted that the coverage area 35 as shown in Fig. 2 is now used to represent the vehicular small cell, as generated by the base station transceiver 100a, 100b. As the common channels are not reconfigured by the stack and thus the stack does not signal the changed power values to the UEs 200, the changed power levels as seen by the UEs 200 are interpreted as varying RF conditions. This can be used to influence the UEs 200 RF measurements and thus influence the decisions taken for hand-in or hand-out in the network. By this it is possible that the vehicle can trigger hand-over decisions without special vehicular handover algorithm implementations or without network 300 knowledge. So UEs 200 can be motivated to camp on the vehicular small cell 35 or they can be forced out of the vehicular small cell 35. The latter can be used when the vehicle decides to gracefully shut down the vehicular small cell 35 operation, e.g. due to decreasing backhaul bandwidth.

In some embodiments, it may be essential for a vehicular small cell 35 to control the power dynamically while the RF conditions change dramatically due to the movement of the vehicle. Embodiments may be used to quickly change the power of the vehicular small cell 35 based on the environment to minimize the interference between the vehicular small cell 35 and the environment (e.g. other cells in the surrounding on the same or adjacent frequencies). Slower mechanisms via the stack software would not be fast enough for vehicular movement.

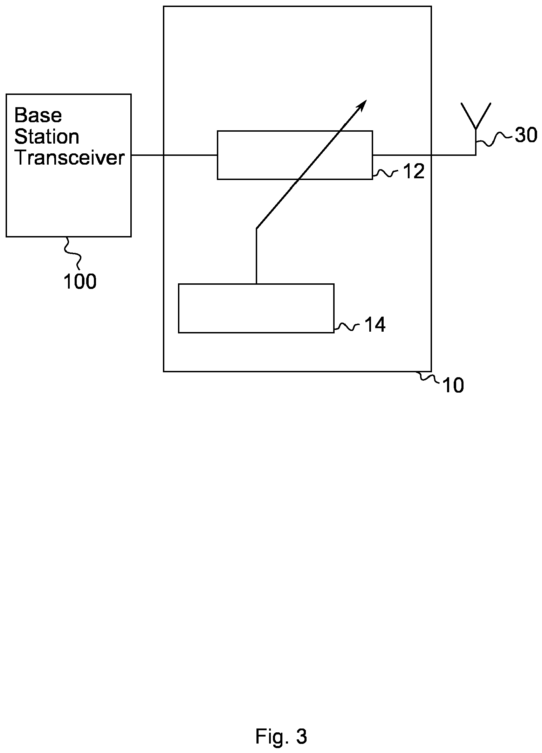

In the following some more detailed implementations of embodiments will be described. In some embodiments the coupling module 12 is configured to affect the transmission power of a base station transceiver 100a, 100b dynamically during service provision of the base station transceiver 100a, 100b. Fig. 3 shows another embodiment of an apparatus 10 for controlling an output power of a base station transceiver 100, with the same components as described with respect to the previous Figs. In Fig. 3 the coupling module 12 corresponds to an adjustable attenuator in the radio signal transmission path of the base station transceiver 100, which could potentially be coupled to an input or an output of a corresponding power amplifier to influence the transmission power of a signal transmitted on the transmission antenna 30. In case of coupling behind the power amplifier or in the high power path, the base station transceiver 100 can be conventional and such embodiments may provide applicability to any base station transceivers 100.

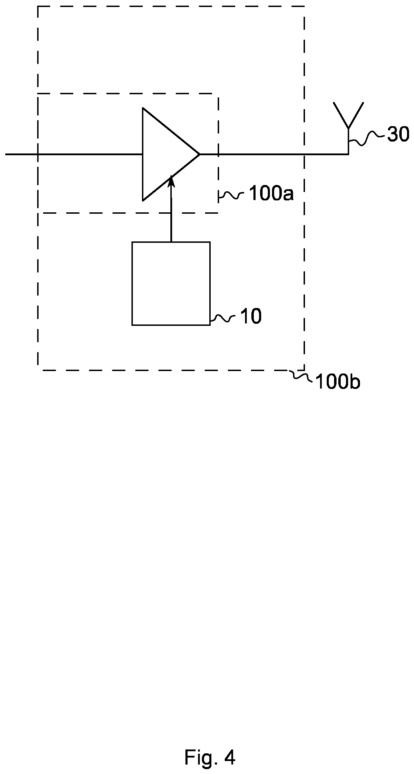

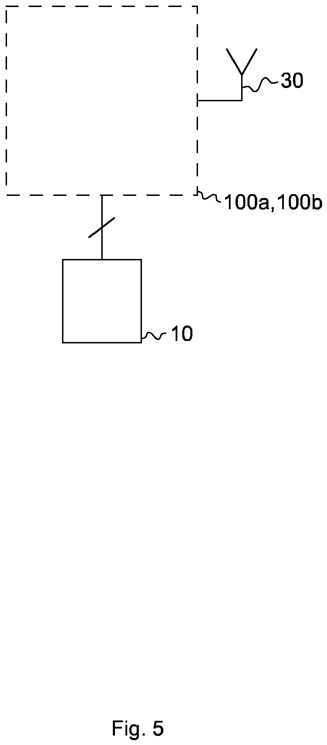

Fig. 4 shows another embodiment of an apparatus 10 for controlling an output power of a base station transceiver 100a, 100b. In this embodiment the coupling module 12 corresponds to a coupling element configured to couple to a variable gain control amplifier in the radio signal transmission path of the base station transceiver 100a, 100b. In this embodiment the base station transceiver 100a, 100b may be accordingly configured to allow the coupling module to influence the gain factor. Fig. 5 shows yet another embodiment of an apparatus 10 for controlling an output power of a base station transceiver 100a, 100b. In this embodiment the coupling module 12 corresponds to one or more interfaces configured to set a transmission power setting at the base station transceiver 100a, 100b, for example making use of any digital or analog communication. The embodiments of the base station transceivers 100a, 100b may then be accordingly configured with an interface for such communication.

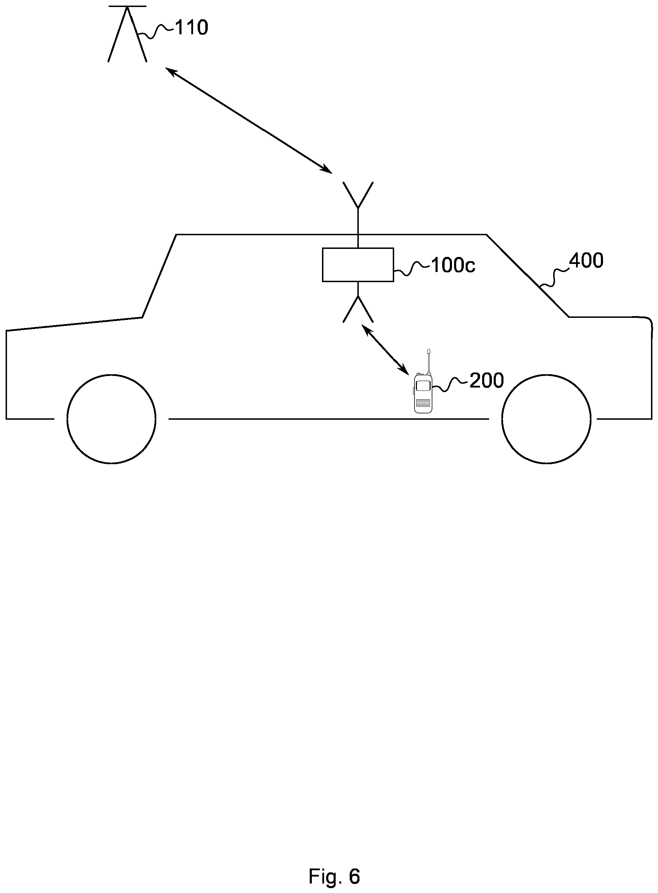

Fig. 6 shows an embodiment of a mobile relay station transceiver 100c, which comprises a base station transceiver 100a, 100b according to the above description. The vehicle 400 corresponds to a car in this embodiment; it could also correspond to any other vehicle, such as a train, a subway, a plane, a ship, a truck, etc. As shown in Fig. 6 a mobile transceiver 200 is located inside the vehicle 400 and is served by the mobile relay station transceiver 100c. In this embodiment the service coverage area of the base station transceiver 100a, 100b, 100c corresponds to a small cell, a micro cell, or a femto cell. The base station transceiver 100a, 100b, 100c corresponds to a relay station transceiver or a mobile relay station transceiver. Embodiments may considerably simplify a vehicular small cell 100c implementation, especially for 3G, but also for other communication systems, and may create the possibility for the car conditions to influence UE 200 visibility of the cell generated by the mobile relay station transceiver 100c and fast interference control in a vehicular environment.

Embodiments may use an additional attenuator, cf. Fig. 3, in the transmit path of the small cell 100, 100a, 100b, 100c, which can be steered with low latency. Typically RF frontend chips already have attenuators in their TX path. For example, these attenuators may be used to adapt the transmission power to the respective application or connected antennas and they may allow a dynamic range of 10 to 15 dB. Embodiments may make use of these attenuator and potentially other measures as described above to adjust the transmission power in a dynamic range of up to 20dB, 30dB, 40dB, 50dB, 60dB, 70dB and even more. In this case there might not be a need for an external transmitter and hence some embodiments may provide means, e.g. in terms of corresponding interfaces and coupling modules or elements, to adjust the transmission power. In some embodiments if the protocol stack of a base station transceiver 100, 100a, 100b, 100c supports it, the transmit power of the stack can also be reduced by software, cf. Fig. 5. The information in the system information blocks might not be adapted. In some embodiments of the base station transceiver apparatus 20 the control module 24 may be further configured to broadcast information related to a power setting for the transmission of the common signal, which is different from an actual power setting for the transmission of the common signal after adjusting the transmission power of the common signal.

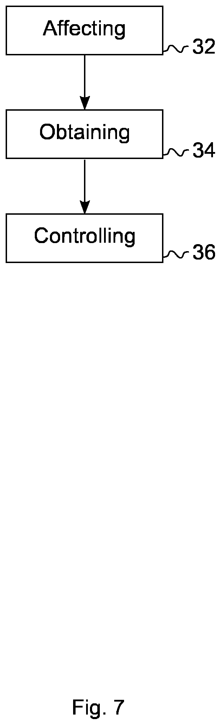

Fig. 7 shows a block diagram of a flow chart of an embodiment of a method for controlling an output power during service provision of a base station transceiver 100a, 100b, 100c of a mobile communication system 300. The base station transceiver 100a, 100b, 100c is configured to provide wireless services to one or more mobile transceivers 200 of the communication system 300. The method comprises affecting 32 a radio signal transmission power of the base station transceiver 100, and obtaining 34 information related to an output power adaption for the base station transceiver 100. The method further comprises controlling 36 the output power of the base station transceiver 100 based on the information related to the output power adaption.

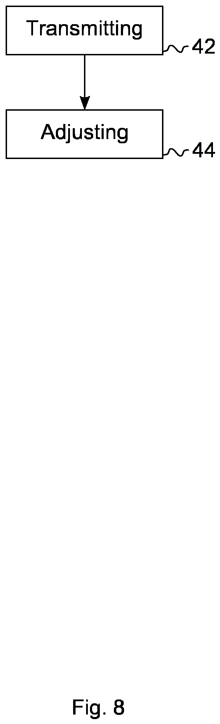

Fig. 8 shows a block diagram of a flow chart of an embodiment of a method for a base station transceiver 100a, 100b, 100c of a mobile communication system 300. The base station transceiver 100a, 100b, 100c is configured to provide wireless services to one or more mobile transceivers 200 of the communication system 300. The method comprises transmitting 42 a common signal. A transmission power of the common signal influences a service coverage area of the base station transceiver 100a, 100b, 100c. The method comprises adjusting 44 the transmission power for the common signal dynamically during service provision of the base station transceiver 100a, 100b, 100c.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for coupling", etc., may be provided through the use of dedicated hardware, such as "a controller", "a transceiver", "a transmitter", "a receiver", "a coupler", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. A base station transceiver (100; 100a; 100b; 100c) of a mobile communication system (300), the base station transceiver (100; 100a; 100b; 100c) being configured to provide wireless services to one or more mobile transceivers (200) of the communication system (300), the base station transceiver further comprising an apparatus (20), the apparatus (20) comprising
a transmission module (22) configured to transmit a common signal, a transmission power of the common signal influencing a service coverage area of the base station transceiver (100; 100a; 100b; 100c); and
a control module (24) configured to
control the transmission module (22),
adjust the transmission power for the common signal dynamically during service provision of the base station transceiver (100; 100a; 100b; 100c), wherein the control module (24) is further configured to broadcast information related to a power setting for the transmission of the common signal which is different from an actual power setting for the transmission of the common signal after adjusting the transmission power of the common signal.

2. The base station transceiver (100; 100a; 100b; 100c) of the preceding claim, further comprising an apparatus (10) and a coupling interface (26) for coupling the apparatus (20) to a coupling module (12) of the apparatus (10) wherein the apparatus (10) is configured to control the transmission power of the common signal during service provision of the base station transceiver (100; 100a; 100b; 100c) of the mobile communication system (300), and wherein the coupling module (12) is configured to adjust the transmission power of the common signal dynamically during service provision in addition to the control module (24); the apparatus (10) further comprising: a control module (14) configured to obtain information related to a power adjustment for the base station transceiver, wherein the coupling module (12) is configured to adjust the transmission power of the common signal based on the obtained information.

3. The base station transceiver (100; 100a; 100b; 100c) of claim 2, wherein the information related to the power adjustment comprises one or more elements of the group of information related to state of movement of a vehicle, information related to a signal quality of a cell of the mobile communication system (300) overlaying or neighboring a coverage area of the base station transceiver (100; 100a; 100b; 100c), and/or information related to an upcoming switch-off of the base station transceiver (100; 100a; 100b; 100c).

4. The base station transceiver (100; 100a; 100b; 100c) of one of the claims 2 or 3, wherein the coupling module (12) is configured to influence a handover behavior of the one or more mobile transceivers (200) between the base station transceiver (100; 100a; 100b; 100c) and another base station transceiver (110) of the mobile communication system (300) by adjusting the transmission power of the common signal of the base station transceiver (100; 100a; 100b; 100c).

5. The base station transceiver (100; 100a; 100b; 100c) of one of the claims 2 to 4, wherein the coupling module (12) corresponds to a coupling element configured to couple to a variable gain control amplifier in the radio signal transmission path of the base station transceiver (100; 100a; 100b; 100c).

6. The base station transceiver (100; 100a; 100b; 100c) of one of the claims 1 to 5, wherein the service coverage area of the base station transceiver (100; 100a; 100b; 100c) corresponds to a small cell, a micro cell, or a femto cell, and/or wherein the base station transceiver (100; 100a; 100b; 100c) corresponds to a relay station transceiver or a mobile relay station transceiver.

7. A method for a base station transceiver (100; 100a; 100b; 100c) of a mobile communication system (300), the base station transceiver (100; 100a; 100b; 100c) being configured to provide wireless services to one or more mobile transceivers (200) of the communication system (300), the method comprising
transmitting (42) a common signal, a transmission power of the common signal influencing a service coverage area of the base station transceiver (100; 100a; 100b; 100c);
adjusting (44) the transmission power for the common signal dynamically during service provision of the base station transceiver (100; 100a; 100b; 100c); and
broadcasting information related to a power setting for the transmission of the common signal which is different from an actual power setting for the transmission of the common signal after adjusting the transmission power of the common signal.

8. A computer program having a program code for performing the method of claim 7, when the computer program is executed on a computer, a processor, or a programmable hardware component.

## Patentansprüche

1. Ein Basisstation-Sendeempfänger (100; 100a; 100b; 100c) eines Mobilkommunikationssystems (300), wobei der Basisstation-Sendeempfänger (100; 100a; 100b; 100c) ausgebildet ist, um drahtlose Dienste an einen oder mehrere mobile Sendeempfänger (200) des Kommunikationssystems (300) bereitzustellen, wobei der Basisstation-Sendeempfänger ferner eine Vorrichtung (20) umfasst, die Vorrichtung (20) umfassend:
ein Sendemodul (22), das ausgebildet ist, um ein gemeinsames Signal zu senden, wobei eine Sendeleistung des gemeinsamen Signals einen Dienstabdeckungsbereich des Basisstation-Sendeempfängers (100; 100a; 100b; 100c) beeinflusst; und
ein Steuerungsmodul (24) ausgebildet zum
Steuern des Sendemoduls (22),
dynamischen Einstellen der Sendeleistung für das gemeinsame Signal während einer Dienstbereitstellung des Basisstation-Sendeempfängers (100; 100a; 100b; 100c), wobei das Steuerungsmodul (24) ferner ausgebildet ist, um Informationen rundzusenden, die sich auf eine Leistungseinstellung für das Senden des gemeinsamen Signals beziehen, die sich von einer tatsächlichen Leistungseinstellung für das Senden des gemeinsamen Signals unterscheidet, nach dem Einstellen der Sendeleistung des gemeinsamen Signals.

2. Der Basisstation-Sendeempfänger (100; 100a; 100b; 100c) gemäß dem vorangehenden Anspruch, ferner umfassend eine Vorrichtung (10) und eine Kopplungsschnittstelle (26) zum Koppeln der Vorrichtung (20) mit einem Kopplungsmodul (12) der Vorrichtung (10), wobei die Vorrichtung (10) ausgebildet ist zum Steuern der Sendeleistung des gemeinsamen Signals während der Dienstbereitstellung des Basisstation-Sendeempfängers (100; 100a; 100b; 100c) des Mobilkommunikationssystems (300), und wobei das Kopplungsmodul (12) ausgebildet ist zum dynamischen Einstellen der Sendeleistung des gemeinsamen Signals während der Dienstbereitstellung, zusätzlich zu dem Steuerungsmodul (24);
die Vorrichtung (10) ferner umfassend:
ein Steuerungsmodul (14), das ausgebildet ist, um Informationen bezogen auf eine Leistungseinstellung für den Basisstation-Sendeempfänger zu erhalten, wobei das Kopplungsmodul (12) ausgebildet ist zum Einstellen der Sendeleistung des gemeinsamen Signals basierend auf den erhaltenen Informationen.

3. Der Basisstation-Sendeempfänger (100; 100a; 100b; 100c) gemäß Anspruch 2, wobei die Informationen bezogen auf die Leistungseinstellung eines oder mehrere Elemente der Gruppe von Informationen bezogen auf einen Bewegungszustand eines Fahrzeugs, Informationen bezogen auf eine Signalqualität einer Zelle des Mobilkommunikationssystems (300), die einen Abdeckungsbereich des Basisstation-Sendeempfängers (100; 100a; 100b; 100c) überlagert oder zu demselben benachbart ist und/oder Informationen bezogen auf ein anstehendes Ausschalten des Basisstation-Sendeempfängers (100; 100a; 100b; 100c) umfassen.

4. Der Basisstation-Sendeempfänger (100; 100a; 100b; 100c) gemäß einem der Ansprüche 2 oder 3, wobei das Kopplungsmodul (12) ausgebildet ist, um ein Übergabeverhalten des einen oder der mehreren mobilen Sendeempfänger (200) zwischen dem Basisstation-Sendeempfänger (100; 100a; 100b; 100c) und einem anderen Basisstation-Sendeempfänger des Mobilkommunikationssystems (300) zu beeinflussen durch Einstellen der Sendeleistung des gemeinsamen Signals des Basisstation-Sendeempfängers (100; 100a; 100b; 100c).

5. Der Basisstation-Sendeempfänger (100; 100a; 100b; 100c) gemäß einem der Ansprüche 2 bis 4, wobei das Kopplungsmodul (12) einem Kopplungselement entspricht, das ausgebildet ist, um mit einem Verstärker mit steuerbarem Verstärkungsfaktor in dem Funksignal-Sendepfad des Basisstation-Sendeempfängers (100; 100a; 100b; 100c) zu koppeln.

6. Der Basisstation-Sendeempfänger (100; 100a; 100b; 100c) gemäß einem der Ansprüche 2 bis 5, wobei der Dienstabdeckungsbereich des Basisstation-Sendeempfängers (100; 100a; 100b; 100c) einer kleinen Zelle, einer Mikrozelle oder einer Femtozelle entspricht und/oder wobei der Basisstation-Sendeempfänger (100; 100a; 100b; 100c) einem Relaisstation-Sendeempfänger oder einem mobilen Relaisstation-Sendeempfänger entspricht.

7. Ein Verfahren für einen Basisstation-Sendeempfängers (100; 100a; 100b; 100c) eines Mobilkommunikationssystems (300), wobei der Basisstation-Sendeempfängers (100; 100a; 100b; 100c) ausgebildet ist, um drahtlose Dienste an einen oder mehrere mobile Sendeempfänger (200) des Mobilkommunikationssystems (300) bereitzustellen, das Verfahren umfassend:
Senden (42) eines gemeinsamen Signals, wobei eine Sendeleistung des gemeinsamen Signals einen Dienstabdeckungsbereich des Basisstation-Sendeempfängers (100; 100a; 100b; 100c) beeinflusst;
dynamisches Einstellen (44) der Sendeleistung für das gemeinsame Signal während einer Dienstbereitstellung des Basisstation-Sendeempfängers (100; 100a; 100b; 100c); und
Rundsenden von Informationen, die sich auf eine Leistungseinstellung für das Senden des gemeinsamen Signals beziehen, die sich von einer tatsächlichen Leistungseinstellung für das Senden des gemeinsamen Signals unterscheidet, nach dem Einstellen der Sendeleistung des gemeinsamen Signals.

8. Ein Computerprogramm mit einem Programmcode zum Ausführen des Verfahrens gemäß Anspruch 7, wenn das Computerprogramm auf einem Computer, einem Prozessor oder einer programmierbaren Hardwarekomponente ausgeführt wird.

## Revendications

1. Émetteur-récepteur de station de base (100 ; 100a ; 100b ; 100c) d'un système de communication mobile (300), l'émetteur-récepteur de station de base (100 ; 100a ; 100b ; 100c) étant configuré pour fournir des services sans fil à un ou plusieurs émetteurs-récepteurs mobiles (200) du système de communication (300), l'émetteur-récepteur de station de base comprenant en outre un appareil (20), l'appareil (20) comprenant
un module de transmission (22) configuré pour transmettre un signal commun, une puissance de transmission du signal commun influant sur une zone de couverture des services de l'émetteur-récepteur de station de base (100 ; 100a ; 100b ; 100c) et
un module de commande (24), configuré pour :
commander le module de transmission (22),
régler dynamiquement la puissance d'émission du signal commun pendant la fourniture des services de l'émetteur-récepteur de station de base (100 ; 100a ; 100b ; 100c), dans lequel le module de commande (24) est en outre configuré pour diffuser des informations relatives à un réglage de puissance pour la transmission du signal commun qui est différent d'un réglage de puissance réel pour la transmission du signal commun après réglage de la puissance de transmission du signal commun.

2. Émetteur-récepteur de station de base (100 ; 100a ; 100b ; 100c) selon la revendication précédente, comprenant en outre un appareil (10) et une interface de couplage (26) pour coupler l'appareil (20) à un module de couplage (12) de l'appareil (10) dans lequel l'appareil (10) est configuré pour contrôler la puissance d'émission du signal commun pendant la fourniture des services de l'émetteur-récepteur de station de base (100 ; 100a ; 100b ; 100c) du système de communication mobile (300), et dans lequel le module de couplage (12) est configuré pour régler la puissance de transmission du signal commun de manière dynamique pendant la fourniture des services en plus du module de commande (24) ; l'appareil (10) comprenant en outre:
un module de commande (14) configuré pour obtenir des informations relatives à un réglage de puissance pour l'émetteur-récepteur de station de base, dans lequel le module de couplage (12) est configuré pour régler la puissance de transmission du signal commun sur la base des informations obtenues.

3. Émetteur-récepteur de station de base (100 ; 100a ; 100b ; 100c) selon la revendication 2, dans lequel les informations liées au réglage de la puissance comprennent un ou plusieurs éléments du groupe constitué d'informations relatives à l'état de déplacement d'un véhicule, d'informations relatives à la qualité du signal d'une cellule du système de communication mobile (300) superposée à ou voisine d'une zone de couverture de l'émetteur-récepteur de station de base (100 ; 100a ; 100b ; 100c) et/ou d'informations relatives à une prochaine désactivation de l'émetteur-récepteur de station de base (100 ; 100a ; 100b ; 100c).

4. Émetteur-récepteur de station de base (100 ; 100a ; 100b ; 100c) selon une des revendications 2 et 3, dans lequel le module de couplage (12) est configuré pour influencer un comportement de transfert intercellulaire du ou des émetteurs-récepteurs mobiles (200) entre l'émetteur-récepteur de station de base (100 ; 100a ; 100b ; 100c) et un autre émetteur-récepteur de station de base (110) du système de communication mobile (300) en réglant la puissance d'émission du signal commun de l'émetteur-récepteur de station de base (100 ; 100a ; 100b ; 100c).

5. Émetteur-récepteur de station de base (100 ; 100a ; 100b ; 100c) selon une des revendications 2 à 4, dans lequel le module de couplage (12) correspond à un élément de couplage configuré pour se coupler à un amplificateur de commande à gain variable dans le chemin de transmission du signal radio de l'émetteur-récepteur de station de base (100; 100a; 100b; 100c).

6. Émetteur-récepteur de station de base (100 ; 100a ; 100b ; 100c) selon une des revendications 1 à 5, dans lequel la zone de couverture des services de l'émetteur-récepteur de station de base (100 ; 100a ; 100b ; 100c) correspond à une petite cellule, une microcellule ou une femto-cellule, et/ou dans lequel l'émetteur-récepteur de station de base (100 ; 100a ; 100b ; 100c) correspond à un émetteur-récepteur d'une station relais ou à un émetteur-récepteur d'une station relais mobile.

7. Procédé pour un émetteur-récepteur de station de base (100 ; 100a 100b ; 100c) d'un système de communication mobile (300), l'émetteur-récepteur de station de base (100 ; 100a ; 100b ; 100c) étant configuré pour fournir des services sans fil à un ou plusieurs émetteurs-récepteurs mobiles (200) du système de communication (300), le procédé comprenant
la transmission (42) d'un signal commun, une puissance de transmission du signal commun influant sur une zone de couverture des services de l'émetteur-récepteur de station de base (100 ; 100a ; 100b ; 100c) ;
le réglage (44) dynamique de la puissance d'émission du signal commun pendant la fourniture des services de l'émetteur-récepteur de station de base (100 ; 100a ; 100b ; 100c) ; et
la diffusion d'informations relatives à un réglage de puissance pour la transmission du signal commun qui est différent d'un réglage de puissance réel pour la transmission du signal commun après réglage de la puissance de transmission du signal commun.

8. Programme informatique ayant un code de programme pour mettre en oeuvre le procédé de la revendication 7, lorsque le programme est exécuté sur un ordinateur, un processeur ou un composant matériel programmable.
